# FASCICULE DE BREVET EUROPEEN

(11) **EP 1 006 021 B1**
(45) Date de publication et mention de la délivrance du brevet: **25.01.2006**
(21) Numéro de dépôt: 99402980.9
(22) Date de dépôt: 30.11.1999
(51) Int. Cl.: B60Q 1/14

(54) **Procédé et dispositif de commande automatique des feux d'un véhicule automobile**
Verfahren und Einrichtung zur automatischen Steuerung von Kfz-Leuchten
Method and device for automatically controlling vehicle lights

(30) Priorité: 02.12.1998 FR 9815233
(43) Date de publication de la demande: 07.06.2000
(73) Titulaire: AUTOMOBILES PEUGEOT, 75116 Paris (FR); AUTOMOBILES CITROEN, 92200 Neuilly-sur-Seine (FR)
(72) Inventeur: Loth, Siri Yuth, 95350 Saint Brice sous Foret (FR)
(74) Mandataire: Habasque, Etienne J. Jean-François

(56) Documents cités:
- FR-A- 2 559 282
- GB-A- 2 308 653

## Description

La présente invention concerne un procédé et un dispositif de commande automatique des feux d'un véhicule automobile.

Plus particulièrement, l'invention se rapporte à un tel procédé et un tel dispositif qui permettent de piloter automatiquement l'allumage et l'extinction des feux d'un véhicule automobile, à partir d'informations de luminosité dans l'environnement de ce véhicule, de vitesse de déplacement de celui-ci et de distance parcourue par celui-ci.

Il existe déjà dans l'état de la technique (preambule de la revendication 1, p. ex FR 2 559 282, des procédés et des dispositifs de ce type dans lesquels on utilise le niveau de luminosité instantanée dans l'environnement du véhicule, pour déclencher l'allumage/extinction des feux du véhicule, par comparaison de ce niveau à des seuils prédéterminés.

On conçoit cependant que ceci présente un certain nombre d'inconvénients car la commande des feux peut alors être inadaptée aux conditions de roulage rencontrées par le véhicule.

Le but de l'invention est donc de résoudre ces problèmes.

A cet effet, l'invention a pour objet un procédé de commande automatique des feux d'un véhicule automobile à partir d'informations de luminosité dans l'environnement du véhicule, de vitesse de déplacement de celui-ci et de distance parcourue par celui-ci, caractérisé en ce que :
en vue de l'allumage des feux, on compare le niveau de luminosité instantanée dans l'environnement du véhicule à deux seuils haut N1 et bas N2 respectivement, pour, si le niveau de luminosité instantanée devient et reste inférieur au seuil bas N2, et
   - si le passage par les deux seuils, du niveau de luminosité instantanée, se fait en un temps inférieur ou égal à T2, allumer immédiatement les feux du véhicule si la vitesse du véhicule est nulle, allumer les feux du véhicule au bout d'une distance parcourue D1 si la vitesse du véhicule est supérieure ou égale à un premier seuil de vitesse, allumer les feux du véhicule au bout d'une distance parcourue D2 si la vitesse du véhicule est inférieure au premier seuil de vitesse ou allumer les feux du véhicule au bout d'une période de temps maximale T13, après le passage du niveau de luminosité instantanée par le seuil bas N2,
   - si le passage par les deux seuils, du niveau de luminosité instantanée, se fait en un temps compris entre T2 et T12, allumer les feux du véhicule au bout de la période de temps T13 après le passage du niveau de luminosité instantanée par le seuil bas N2, et
   - si avant la fin de ces comptages de temps ou de distance, le niveau de luminosité instantanée repasse au-dessus puis au-dessous du seuil bas N2, allumer les feux du véhicule après une période de temps T17 après ce nouveau passage du niveau de luminosité instantanée par le seuil bas N2.

Avantageusement, en vue de l'extinction des feux, on compare le niveau de luminosité instantanée dans l'environnement du véhicule à des seuils bas N3 et haut N4 respectivement, pour, si le niveau de luminosité instantanée devient et reste supérieur au seuil haut N4, et
- si le passage par les deux seuils, du niveau de luminosité instantanée, se fait en un temps inférieur ou égal à T4 et si la vitesse du véhicule est supérieure ou égale à un second seuil de vitesse, éteindre les feux du véhicule au bout d'une période de temps égale à T5, et si la vitesse du véhicule est inférieure au second seuil de vitesse, éteindre les feux du véhicule au bout d'une période de temps T6, après le passage du niveau de luminosité instantanée par le seuil haut N4,
- si le passage par les deux seuils, du niveau de luminosité instantanée, se fait en un temps compris entre T4 et T14, éteindre les feux du véhicule au bout d'une période de temps T15 après passage du niveau de luminosité instantanée par le seuil haut N4; et
- si avant la fin de ces comptages, le niveau de luminosité instantanée repasse au-dessous puis au-dessus du seuil haut N4, éteindre les feux du véhicule au bout d'une période de temps correspondant à T5,T6 ou T15, telle que définie précédemment après ce nouveau passage du niveau de luminosité instantanée par le seuil haut N4.

Selon un autre aspect, l'invention a également pour objet un dispositif pour la mise en oeuvre de ce procédé.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant un exemple de réalisation d'un dispositif de commande selon l'invention;
- la Fig.2 représente un organigramme illustrant l'acquisition d'informations de luminosité instantanée dans l'environnement du véhicule et le traitement de celles-ci pour déterminer des valeurs de luminosité ambiante naturelle dans l'environnement du véhicule;
- la Fig.3 illustre le traitement de ces valeurs de luminosité ambiante naturelle dans l'environnement du véhicule pour l'allumage et l'extinction des feux de celui-ci;
- la Fig.4 illustre le traitement des valeurs de luminosité instantanée dans l'environnement du véhicule pour l'allumage des feux du véhicule; et
- la Fig.5 illustre le traitement des valeurs de luminosité instantanée dans l'environnement du véhicule pour l'extinction des feux du véhicule.

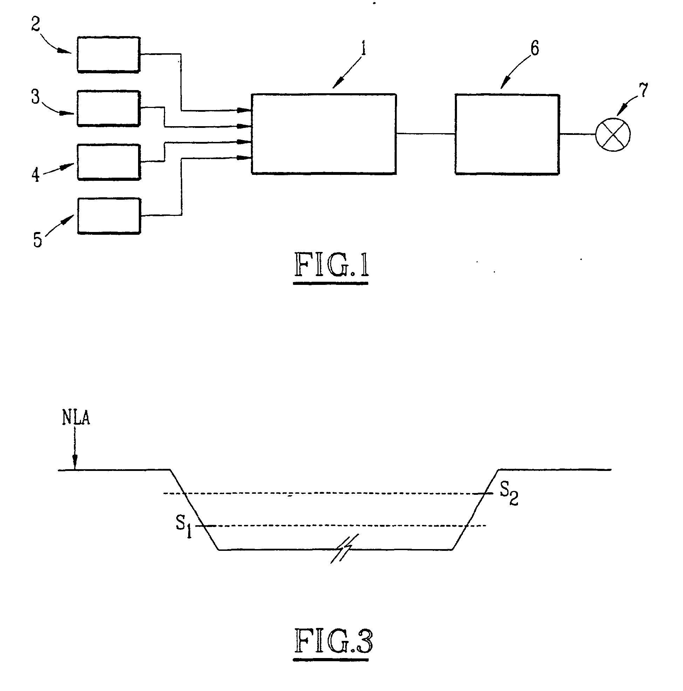

On a représenté sur la figure 1, un dispositif de commande automatique de feux d'un véhicule automobile.

Ce dispositif comporte une unité centrale de traitement d'informations désignée par la référence générale 1, reliée en entrée à différents organes parmi lesquels un comodo 2 d'instrumentation du véhicule, actionnable par le conducteur du véhicule, un capteur de luminosité instantanée dans l'environnement du véhicule, désigné par la référence générale 3, un capteur de vitesse désigné par la référence générale 4 et une base de temps désignée par la référence générale 5.

Comme cela sera décrit plus en détail par la suite, l'unité centrale de traitement d'informations 1 est adaptée pour analyser les informations délivrées par ces différents organes et piloter le fonctionnement de moyens de commande 6 d'allumage/extinction des feux 7 du véhicule.

L'une des tâches de l'unité centrale 1 est de déterminer des valeurs de luminosité ambiante naturelle à partir des informations relatives à la luminosité instantanée dans l'environnement du véhicule.

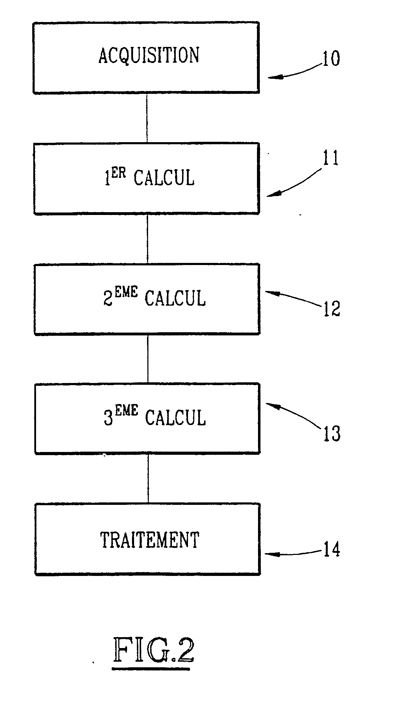

Ceci est illustré sur la figure 2, dans laquelle les différents moyens permettant de réaliser ces différentes fonctions sont illustrés sous la forme de blocs.

C'est ainsi par exemple que cette unité centrale de traitement d'informations comprend :
- des moyens 10 d'acquisition périodique d'informations de luminosité instantanée en sortie du capteur de luminosité 3, par exemple toutes les 200 millisecondes,
- des moyens 11 de calcul de valeurs de luminosité immédiate, par calcul de la moyenne sur une première période de temps, égale à environ 1s, des valeurs de luminosité instantanée comprises dans une première plage de variation déterminée, égale par exemple à 50 Lux,
- des moyens 12 de calcul de valeurs de luminosité ambiante immédiate, par calcul de la moyenne sur une seconde période de temps, égale à environ 3s, des valeurs de luminosité immédiate comprises dans une seconde plage de variation déterminée, égale par exemple à environ 50 Lux,
- des moyens 13 de calcul des valeurs de luminosité ambiante naturelle, par calcul de la moyenne de n premières valeurs de luminosité ambiante immédiate, n étant par exemple égal à 10, comprises dans une troisième plage de variation déterminée, égale par exemple à 50 Lux, sur une troisième période de temps maximale, égale par exemple à environ 60s, et
- des moyens 14 de traitement de ces valeurs de luminosité ambiante naturelle pour déclencher l'allumage/extinction des feux du véhicule.

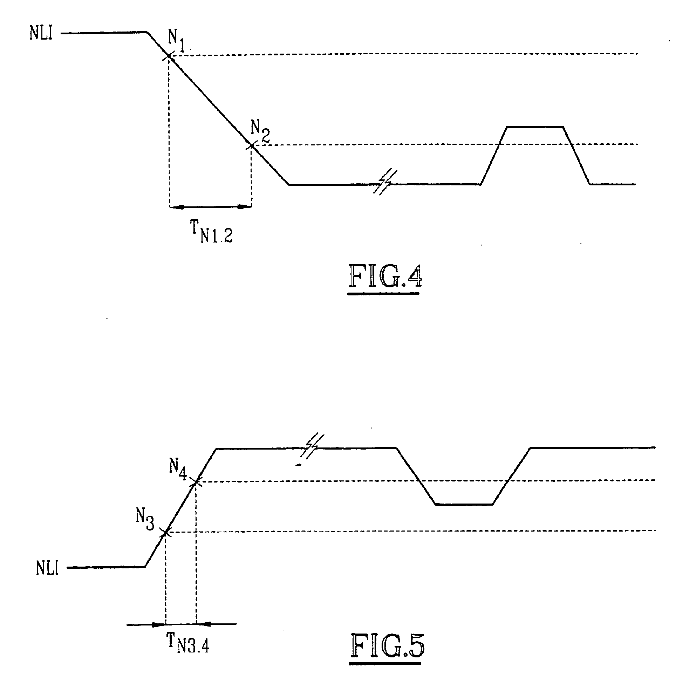

Ce traitement est illustré sur la figure 3, dans laquelle on peut constater que si le niveau de luminosité ambiante naturelle tel que calculé précédemment et désigné par la référence NLA sur cette figure 3, devient inférieur ou égal à un seuil S1, par exemple de 550 Lux, on allume immédiatement les feux du véhicule.

A l'inverse , si le niveau de luminosité ambiante naturelle NLA redevient supérieur à un seuil S2, égal par exemple à 2700Lux, on éteint immédiatement les feux du véhicule.

On peut également noter que si le niveau de luminosité instantanée en sortie du capteur 3 est inférieur à ce seuil S1 lors de la mise sous tension du système, on allume également immédiatement les feux du véhicule.

Dans ce cas, si le niveau de luminosité instantanée reste inférieur à ce seuil S1 pendant au moins une période de temps T16 égale par exemple à 30 mn, et que le vitesse du véhicule pendant cette période de temps T16 devient au moins une fois non nulle, on doit alors considérer qu'il s'agit d'un cas d'allumage par le crépuscule.

Dans le cas contraire, on doit considérer qu'il s'agit d'un cas d'allumage dans un parking ou dans un tunnel.

Il est également à noter que lorsque les feux du véhicule sont allumés dans ces conditions, si l'information "+ moteur tournant" disparaît, c'est-à-dire par exemple si celui-ci cale, les feux ne doivent pas être éteints.

Si le niveau de luminosité instantanée dans l'environnement du véhicule en sortie du capteur 3, reste supérieur au seuil S2 pendant un temps T3 égal par exemple à 60s, il convient également d'éteindre les feux.

On conçoit alors que cette structure permet de commander l'allumage/extinction des feux du véhicule à partir d'informations correspondant au crépuscule et à l'aube.

En effet, dans ces conditions, les variations de niveau de luminosité sont relativement lentes.

Cependant, il existe des cas dans lesquels ces variations sont relativement rapides, comme par exemple lorsque le véhicule passe sous un pont, dans un tunnel ou entre dans un parking.

Dans ce cas, il convient d'analyser le niveau de luminosité instantanée dans l'environnement du véhicule et sa variation.

On a représenté sur la figure 4, un exemple de traitement du niveau de luminosité instantanée pour l'allumage des feux.

C'est ainsi que selon cette figure 4, pour déclencher l'allumage des feux, on compare le niveau de luminosité instantanée NLI dans l'environnement du véhicule, à des seuils haut N1 et bas N2 respectivement.

Ces seuils peuvent par exemple être fixés ou déterminés à partir du niveau de luminosité moyen Nm calculé à partir de différents niveaux décrits précédemment.

Ainsi, N1 peut être déterminé à partir des valeurs de niveaux de luminosité ambiante naturelle NLA par soustraction à celles-ci d'une valeur prédéterminée Δ, comme par exemple 50 Lux, avec une valeur limite maximale égale par exemple à 1700 Lux.

On conçoit alors que :
si NLA > Nm alors N1 = Nm.
si S1 < NLA ≤ Nm alors N1 = NLA - Δ
avec Nm = 1700 Lux, N2= 450 Lux et Δ = 50 Lux.

Si le passage par ces deux seuils N1 et N2 du niveau de luminosité instantanée se fait en un temps TN1.2 inférieur ou égal à T2, c'est-à-dire par exemple 3s, on allume immédiatement les feux de véhicule si la vitesse du véhicule est nulle.

Par contre, si la vitesse du véhicule n'est pas nulle, mais est inférieure à un premier seuil de vitesse, par exemple égal à 20 km/h, on allume les feux du véhicule au bout d'une distance parcourue D2, c'est-à-dire par exemple 5 mètres, tandis que si la vitesse du véhicule est supérieure ou égale à ce premier seuil de vitesse de 20 km/h par exemple, on allume les feux du véhicule au bout d'une distance parcourue D1, c'est-à-dire par exemple 60 m.

En tout état de cause, on allume les feux du véhicule au bout d'une période de temps maximale T13 égale par exemple à 10s, si le niveau de luminosité instantanée NLI reste inférieur au seuil bas N2.

Si le passage par ces deux seuils N1 et N2 du niveau de luminosité instantanée se fait en un temps TN1.2 compris entre T2, c'est-à-dire 3s, et T12, c'est-à-dire par exemple 30s, on allume les feux du véhicule au bout de la période de temps T13 par exemple de 10s, si le niveau de luminosité instantanée NLI reste inférieur au seuil bas N2.

Enfin, si avant la fin de ces comptages de temps ou de distance, le niveau de luminosité instantanée NLI repasse au-dessus puis au-dessous du seuil bas N2, on allume les feux du véhicule après une période de temps T17 de 10s par exemple, si le niveau de luminosité instantanée NLI reste inférieur au seuil bas N2.

On conçoit alors que ceci permet par exemple de détecter le passage du véhicule sous un pont afin d'éviter tout allumage intempestif des feux du véhicule.

En effet, si le niveau de luminosité instantanée NLI est repassé au-dessus du seuil N2, avant que la distance D1 ou D2 ait été parcourue, ou avant la fin de la temporisation T13, et si ce niveau ne repasse pas en-dessous de ce seuil N2, on considère alors que le véhicule est passé sous un pont et il n'y a pas de consigne d'allumage des feux.

Par contre, si le niveau de luminosité reste en-dessous du seuil N2 après que la distance D1 ou D2 a été parcourue, on détermine alors qu'il s'agit d'un tunnel et on délivre une consigne d'allumage immédiat des feux.

Dans le cas d'une décroissance progressive du niveau de luminosité, prise en compte uniquement si la vitesse du véhicule est supérieure ou égale au premier seuil de vitesse, par exemple de 20 km/h, on allume les feux du véhicule après la période de temps T13.

Si le niveau de luminosité instantanée NLI passe au-dessus du seuil N2 et repasse en-dessous de ce seuil N2 avant que la distance D1 ou D2 ait été parcourue, ou avant la fin de la période de temps T13, une nouvelle temporisation T17 est lancée à partir du passage sous le seuil N2.

Au cours de cette temporisation T17, si le niveau de luminosité instantanée reste inférieur à ce seuil N2, on délivre une consigne d'allumage des feux du véhicule, à la fin de cette temporisation.

Ceci correspond alors au passage du véhicule dans un tunnel avec un puits de jour, comme cela est illustré sur la figure 4.

Si la vitesse du véhicule est comprise strictement entre 0 et le premier seuil de vitesse de 20km/h par exemple, et si le niveau de luminosité est resté en-dessous du seuil N2, on considère alors que le véhicule circule dans un parking et on délivre une consigne d'allumage des feux du véhicule après une distance parcourue égale à D2.

Si la vitesse du véhicule devient nulle avant que la distance D1 ne soit atteinte, et que le niveau de luminosité est inférieur au seuil N2, on délivre également une consigne d'allumage immédiat des feux.

Dans le cas où le niveau de luminosité est inférieur à N2, il est donc accepté d'allumer les feux du véhicule sous un pont, dans le cas où le véhicule reste immobilisé sous celui-ci, ce qui peut être le cas par exemple lorsque le véhicule est bloqué dans un embouteillage ou d'une entrée dans un garage non éclairé.

La commande d'extinction des feux est quant à elle illustrée sur la figure 5.

A cet effet, on compare le niveau de luminosité instantanée NLI dans l'environnement du véhicule à des seuils bas N3 et haut N4 respectivement.

Ces seuils N3 et N4 peuvent être déterminés comme les seuils N1 et N2 évoqués précédemment.

C'est ainsi par exemple que le seuil N3 peut être égal à 450 Lux, tandis que le seuil N4 peut être déterminé à partir des valeurs de luminosité ambiante naturelle NLA par soustraction à celles-ci d'une valeur prédéterminée Δ, par exemple de 50 Lux.

Ainsi, si NLA est supérieur à NM (niveau moyen de luminosité avant l'entrée dans le tunnel), alors N4 est égal à NM.

Cependant, si NLA est compris entre S1 et NM, alors N4=NLA - Δ, avec Δ = 50 Lux.

Si le passage par les deux seuils du niveau de luminosité se fait en un temps TN3.4 inférieur ou égal à T4 par exemple de 3s, et si la vitesse du véhicule est supérieure ou égale à un second seuil de vitesse, égal par exemple également à 20 km/h, on éteint les feux du véhicule au bout d'une période de temps égale à T5, par exemple de 5s.

Si la vitesse du véhicule est inférieure au second seuil de vitesse de 20 km/h, on éteint les feux du véhicule au bout d'une période de temps T6 égale par exemple à 10s.

Ces périodes de temps T5 et T6 sont calculées après le passage du niveau de luminosité instantanée par le seuil haut N4.

Par contre, si le passage par les deux seuils, du niveau de luminosité instantanée, se fait en un temps compris entre T4, par exemple de 3s, et T14 par exemple de 30s, on éteint les feux du véhicule au bout d'une période de temps T15 par exemple de 10s, si le niveau de luminosité instantanée NLI reste supérieur au seuil haut N4.

Si avant la fin de ces comptages, le niveau de luminosité instantanée LNI repasse au-dessous puis au-dessus du seuil haut N4, on éteint les feux du véhicule au bout d'une période de temps correspondant à T5,T6 ou T15 telle que déterminée précédemment, si le niveau de luminosité instantanée NLl reste supérieur au seuil haut N4.

On conçoit alors que ceci permet de déclencher l'extinction des feux par exemple lors de la sortie d'un tunnel ou d'un parking insuffisamment éclairé même dans le cas d'un obscurcissement passager après la sortie de celui-ci.

De plus, si l'allumage des feux a été provoqué lors de la mise sous tension du système dans un parking ou un tunnel (NLI < S1) et que le niveau de luminosité instantanée reste supérieur au niveau N3, le passage en sortie du tunnel à un niveau de luminosité instantanée supérieur à N4 provoque également l'extinction des feux après la temporisation T5 ou T6 déterminée en fonction de la vitesse du véhicule.

A la coupure du contact du véhicule, si le niveau de luminosité instantanée est inférieur au seuil bas S1, on allume les feux du véhicule pendant une période de temps T11, égale par exemple à 45s après la coupure du contact ou après la fermeture de la porte du conducteur du véhicule, si celle-ci a été ouverte avant la fin de cette période de temps T11.

Ceci permet alors de maintenir l'allumage des feux du véhicule le temps d'une manoeuvre à l'extérieur du véhicule, dans une zone de stationnement où l'on ne verrouille pas le véhicule.

Le véhicule est alors considéré à l'arrêt et moteur coupé.

On conçoit alors que ce procédé et ce dispositif permettent de piloter de façon automatique l'allumage et l'extinction des feux d'un véhicule automobile de façon optimisée, pour améliorer la sécurité de conduite de celui-ci.

## Revendications

1. Procédé de commande automatique des feux d'un véhicule automobile à partir d'informations de luminosité dans l'environnement du véhicule, de vitesse de déplacement de celui-ci et de distance parcourue par celui-ci, **caractérisé en ce que** :
en vue de l'allumage des feux (Fig.3, Fig.4), on compare le niveau de luminosité instantanée (NLI) dans l'environnement du véhicule à deux seuils haut N1 et bas N2 respectivement, pour, si le niveau de luminosité instantanée devient et reste inférieur au seuil bas N2, et
- si le passage par les deux seuils, du niveau de luminosité instantanée, se fait en un temps (TN1.2) inférieur ou égal à T2, allumer immédiatement les feux du véhicule si la vitesse du véhicule est nulle, allumer les feux du véhicule au bout d'une distance parcourue D1 si la vitesse du véhicule est supérieure ou égale à un premier seuil de vitesse, allumer les feux du véhicule au bout d'une distance parcourue D2 si la vitesse du véhicule est inférieure au premier seuil de vitesse, après le passage du niveau de luminosité instantanée par le seuil bas N2,
- si le passage par les deux seuils, du niveau de luminosité instantanée, se fait en un temps compris entre T2 et T12, allumer les feux du véhicule au bout de la période de temps T13 après le passage du niveau de luminosité instantanée par le seuil bas N2, et
- si avant la fin de ces comptages de temps ou de distance, le niveau de luminosité instantanée repasse au-dessus puis au-dessous du seuil bas N2, allumer les feux du véhicule après une période de temps T17 après ce nouveau passage du niveau de luminosité instantanée par le seuil bas N2.

2. Procédé selon la revendication 1, **caractérisé en ce que** :
en vue de l'extinction des feux (Fig.3, Fig.5), on compare le niveau de luminosité instantanée (NLI) dans l'environnement du véhicule à des seuils bas N3 et haut N4 respectivement, pour, si le niveau de luminosité instantanée devient et reste supérieur au seuil haut N4, et
- si le passage par les deux seuils, du niveau de luminosité instantanée, se fait en un temps (TN3.4) inférieur ou égal à T4 et si la vitesse du véhicule est supérieure ou égale à un second seuil de vitesse, éteindre les feux du véhicule au bout d'une période de temps égale à T5, et si la vitesse du véhicule est inférieure au second seuil de vitesse, éteindre les feux du véhicule au bout d'une période de temps T6, après le passage du niveau de luminosité instantanée par le seuil haut N4,
- si le passage par les deux seuils, du niveau de luminosité instantanée, se fait en un temps compris entre T4 et T14, éteindre les feux du véhicule au bout d'une période de temps T15 après passage du niveau de luminosité instantanée par le seuil haut N4, et
- si avant la fin de ces comptages, le niveau de luminosité instantanée repasse au-dessous puis au-dessus du seuil haut N4, éteindre les feux du véhicule au bout d'une période de temps correspondant à T5,T6 ou T15, telle que définie précédemment après ce nouveau passage du niveau de luminosité instantanée par le seuil haut N4.

3. Dispositif selon la revendication 1 ou 2, **caractérisé en ce que** dans le cas où la vitesse du véhicule devient nulle et où le niveau de luminosité instantanée est inférieur au seuil bas N2 alors que la distance D1 ou D2 n'a pas encore été atteinte, on allume les feux du véhicule.

4. Procédé selon la revendication 2, **caractérisé en ce qu'**au démarrage, dans le cas où le niveau de luminosité instantanée (NLI) est inférieur à un seuil bas S1 et franchit le seuil haut N4, sans avoir franchi le seuil bas N3, on éteint les feux du véhicule après une période de temps T5 ou T6 si la vitesse du véhicule est supérieure/égale ou inférieure respectivement à un troisième seuil de vitesse.

5. Procédé selon l'une quelconque des revendications précédentes, **caractérisé en ce qu'**à la coupure du contact du véhicule, si le niveau de luminosité instantanée (NLI) est inférieur à un seuil bas S1, on allume les feux du véhicule pendant une période de temps T11, après la coupure du contact ou après la fermeture de la porte du conducteur du véhicule, si celle-ci a été ouverte avant la fin de cette période de temps T11.

6. Procédé selon l'une quelconque des revendications précédentes, **caractérisé en ce que**:
- on réalise (en 10) une acquisition périodique des informations de luminosité instantanée (NLI) en sortie d'un capteur de luminosité associé au véhicule,
- on calcule (en 11) des valeurs de luminosité immédiate par calcul de la moyenne sur une première période de temps, des valeurs de luminosité instantanée comprises dans une première plage de variation déterminée,
- on calcule (en 12) des valeurs de luminosité ambiante immédiate par calcul de la moyenne sur une seconde période de temps, des valeurs de luminosité immédiate comprises dans une seconde plage de variation déterminée,
- on calcule (en 13) des valeurs de luminosité ambiante naturelle (NLA) par calcul de la moyenne de n premières valeurs de luminosité ambiante immédiate, comprises dans une troisième plage de variation déterminée, sur une troisième période de temps maximale, et
- on détermine les seuils haut N1 et N4 à partir de ces valeurs de luminosité ambiante naturelle (NLA).

7. Procédé selon la revendication 6, **caractérisé en ce que** les première, seconde et troisième plages de variation déterminées sont égales à 50 Lux.

8. Procédé selon la revendication 6 ou 7, **caractérisé en ce que** n est égal à 10.

9. Procédé selon l'une quelconque des revendications 6, 7 ou 8, **caractérisé en ce que** les informations de luminosité instantanée sont acquises toutes les 200 ms environ.

10. Procédé selon l'une quelconque des revendications 6 à 9, **caractérisé en ce que** la première période de temps est égale à 1 seconde environ.

11. Procédé selon l'une quelconque des revendications 6 à 10, **caractérisé en ce que** la seconde période de temps est égale à 3 secondes environ.

12. Procédé selon l'une quelconque des revendications 6 à 11, **caractérisé en ce que** la troisième période de temps est égale à 60 secondes environ.

13. Procédé selon la revendication 5 et l'une quelconque des revendications 6 à 12, **caractérisé en ce que** l'on compare (Fig.3) le niveau de luminosité ambiante naturelle (NLA) au seuil bas S1 et à un seuil haut S2 pour déclencher l'allumage des feux du véhicule si ce niveau est inférieur ou égal au seuil S1 et l'extinction des feux du véhicule si le niveau est supérieur ou égal au seuil haut S2.

14. Procédé selon les revendications précédentes, **caractérisé en ce que** les deux seuils bas N2 et N3 sont égaux à 450 Lux, T2 = 3s, D1 = 60 m, le premier seuil de vitesse est égal à 20 km/h, D2 = 5m, T13 = 10s, T12 = 30s, T17 = 10s, T4 = 3s, le second seuil de vitesse est égal à 20 km/h, T5 = 5s, T6 = 10s, T14 = 30s, T15 = 10s, S1 = 550 Lux, T11 = 45s, S2 = 2700 Lux et le troisième seuil de vitesse est égal à 20 km/h.

15. Procédé selon les revendications précédentes, **caractérisé en ce que** les seuils haut N1 et N4 sont évolutifs et déterminés à partir des valeurs de luminosité ambiante naturelle (NLA) par soustraction à celles-ci d'une valeur prédéterminée (Δ), avec une valeur limite maximale (Nm) et une valeur limite minimale (S1).

16. Procédé selon la revendication 15, **caractérisé en ce que** la valeur prédéterminée (Δ) est égale à 50 Lux, la valeur limite maximale est égale à 1700 Lux et la valeur limite minimale est égale à 550 Lux.

17. Dispositif de commande automatique des feux d'un véhicule automobile, pour la mise en oeuvre du procédé des revendications 1 à 16, **caractérisé en ce qu'**il comporte une unité centrale de traitement d'informations (1) de commande du fonctionnement des moyens de pilotage (6) de l'allumage/extinction des feux (7) du véhicule, raccordés en entrée à un capteur de luminosité dans l'environnement du véhicule (3), un capteur de vitesse (4) du véhicule et une base de temps (5).

## Patentansprüche

1. Verfahren zum automatischen Steuern von Leuchten eines Kraftfahrzeugs anhand der Helligkeit der Umgebung des Fahrzeugs, der Fahrgeschwindigkeit desselben und der von diesem durchfahrenen Wegstrecke, **dadurch gekennzeichnet, dass**:
hinsichtlich des Einschaltens der Leuchten (Fig. 3, Fig. 4) der Pegel der Momentanhelligkeit (NLI) in der Umgebung des Fahrzeugs mit zwei Schwellen, jeweils hoch N1 und niedrig N2, verglichen wird, um, wenn der Pegel der Momentanhelligkeit kleiner als die niedrige Schwelle N2 wird und unter der niedrigen Schwelle N2 bleibt, und
- wenn das Durchlaufen des Pegels der Momentanhelligkeit durch diese beiden Schwellen in einer Zeit (TN1.2) erfolgt, die kleiner als oder gleich T2 ist, sofort die Leuchten des Fahrzeugs einzuschalten, wenn die Fahrzeuggeschwindigkeit Null beträgt; die Leuchten des Fahrzeugs am Ende einer durchfahrenen Wegstrecke D1 einzuschalten, wenn die Fahrzeuggeschwindigkeit größer als eine erste oder gleich einer ersten Geschwindigkeitsschwelle ist, die Leuchten des Fahrzeugs am Ende einer durchfahrenen Wegstrecke D2 einzuschalten, wenn die Fahrzeuggeschwindigkeit kleiner als die erste Geschwindigkeitsschwelle ist, nach dem Durchlaufen des Pegels der Momentanhelligkeit durch die niedrige Schwelle N2;
- wenn das Durchlaufen des Pegels der Momentanhelligkeit durch die beiden Schwellen in einer Zeit zwischen T2 und T12 erfolgt, die Lampen des Fahrzeugs am Ende des Zeitabschnitts T13 nach dem Durchlaufen des Pegels der Momentanhelligkeit durch die niedrige Schwelle N2 einzuschalten; und
- wenn vor dem Ablauf dieser Messungen von Zeit oder Wegstrecke der Pegel der Momentanhelligkeit wieder die niedrige Schwelle N2 über- dann - unterschreitet, die Leuchten des Fahrzeugs nach einem Zeitabschnitt T17 nach diesem neuen Durchlaufen des Pegels der Momentanhelligkeit durch die niedrige Schwelle N2 einzuschalten.

2. Verfahren nach Anspruch 1, **dadurch gekennzeichnet, dass**:
hinsichtlich des Ausschaltens der Leuchten (Fig. 3, Fig. 5) der Pegel der Momentanhelligkeit (NLI) in der Umgebung des Fahrzeugs mit Schwellen, jeweils niedrig N3 und hoch N4, verglichen wird, um, wenn der Pegel der Momentanhelligkeit größer als die hohe Schwelle N4 wird und über der hohen Schwelle N4 bleibt, und
- wenn das Durchlaufen des Pegels der Momentanhelligkeit durch diese beiden Schwellen in einer Zeit (TN3.4) erfolgt, die kleiner als oder gleich T4 ist, und wenn die Fahrzeuggeschwindigkeit größer als eine oder gleich einer zweiten Geschwindigkeitsschwelle ist, die Leuchten des Fahrzeugs am Ende eines Zeitabschnitts gleich T5 auszuschalten; und wenn die Fahrzeuggeschwindigkeit kleiner ist als die zweite Geschwindigkeitsschwelle, die Leuchten des Fahrzeugs am Ende eines Zeitabschnitts T6 auszuschalten, nach dem Durchlaufen des Pegels der Momentanhelligkeit durch die hohe Schwelle N4;
- wenn das Durchlaufen des Pegels der Momentanhelligkeit durch die beiden Schwellen in einer Zeit zwischen T4 und T14 erfolgt, die Lampen des Fahrzeugs am Ende eines Zeitabschnitts T15 nach dem Durchlaufen des Pegels der Momentanhelligkeit durch die hohe Schwelle N4 auszuschalten; und
- wenn vor dem Ablauf dieser Messungen der Pegel der Momentanhelligkeit die hohe Schwelle N4 wieder unter- dann überschreitet, die Leuchten des Fahrzeugs am Ende eines Zeitabschnitts korrespondierend zu T5, T6 oder T15, solche wie vorher festgelegt, nach diesem neuen Durchlaufen des Pegels der Momentanhelligkeit durch die hohe Schwelle N4 auszuschalten.

3. Verfahren nach Anspruch 1 oder 2, **dadurch gekennzeichnet, dass** in dem Fall, in welchem die Fahrzeuggeschwindigkeit zu Null wird, oder in welchem der Pegel der Momentanhelligkeit kleiner ist als die niedrige Schwelle N2, während die Wegstrecke D1 oder D2 noch nicht durchfahren ist, die Leuchten des Fahrzeugs eingeschaltet werden.

4. Verfahren nach Anspruch 2, **dadurch gekennzeichnet, dass** zum Anfahren, in dem Fall, in welchem der Pegel der Momentanhelligkeit (NLI) kleiner ist als eine niedrige Schwelle S1 und die hohe Schwelle N4 überschreitet, ohne die niedrige Schwelle N3 überschritten zu haben, die Leuchten des Fahrzeugs nach einem Zeitabschnitt T5 oder T6 ausgeschaltet werden, wenn die Fahrzeuggeschwindigkeit jeweils größer als eine dritte/gleich einer dritten oder kleiner als eine dritte Geschwindigkeitsschwelle ist.

5. Verfahren nach einem der vorhergehenden Ansprüche, **dadurch gekennzeichnet, dass** beim Abschalten des Fahrzeugs, wenn der Pegel der Momentanhelligkeit (NLI) kleiner als eine niedrige Schwelle S1 ist, die Leuchten des Fahrzeugs während eines Zeitabschnitts T11 nach dem Abschalten oder nach dem Schließen der Fahrertür des Fahrzeugs eingeschaltet werden, wenn diese vor dem Ende dieses Zeitabschnitts T11 geöffnet wird.

6. Verfahren nach einem der vorhergehenden Ansprüche, **dadurch gekennzeichnet, dass** es folgende Verfahrensschritte aufweist:
- Periodisches Erfassen (in 10) von Informationen bzw. Daten der Momentanhelligkeit (NLI) von der Ausgabe eines Helligkeitssensors, der mit dem Fahrzeug verbunden ist;
- Berechnen (in 11) von Werten der Momentanhelligkeit durch Berechnen des Mittelwerts in einem ersten Zeitabschnitt, von Werten der Momentanhelligkeit in einem ersten festgelegten Variationsbereich;
- Berechnen (in 12) von Werten der unmittelbaren Umgebungshelligkeit durch Berechnen des Mittelwerts in einem ersten Zeitabschnitt, von Werten der unmittelbaren Helligkeit in einem zweiten festgelegten Variationsbereich;
- Berechnen (in 13) von Werten der natürlichen Umgebungshelligkeit (NLA) durch Berechnen des Mittelwerts von n ersten Werten der unmittelbaren Umgebungshelligkeit, die in einem dritten festgelegten Variationsbereich liegen, in einem dritten maximalen Zeitabschnitt; und
- Festlegen der hohen Schwellen N1 und N4 ausgehend von diesen Werten der natürlichen Umgebungshelligkeit (NLA).

7. Verfahren nach Anspruch 6, **dadurch gekennzeichnet, dass** die ersten, zweiten und dritten festgelegten Variationsbereiche gleich 50 Lux sind.

8. Verfahren nach Anspruch 6 oder 7, **dadurch gekennzeichnet, dass** n gleich 10 ist.

9. Verfahren nach einem der Ansprüche 6, 7 oder 8, **dadurch gekennzeichnet, dass** die Informationen bzw. Daten der Momentanhelligkeit ungefähr alle 200 ms erfasst werden.

10. Verfahren nach einem der Ansprüche 6 bis 9, **dadurch gekennzeichnet, dass** der erste Zeitabschnitt ungefähr gleich 1 Sekunde ist.

11. Verfahren nach einem der Ansprüche 6 bis 10, **dadurch gekennzeichnet, dass** der zweite Zeitabschnitt ungefähr gleich 3 Sekunden ist.

12. Verfahren nach einem der Ansprüche 6 bis 11, **dadurch gekennzeichnet, dass** der dritte Zeitabschnitt ungefähr gleich 60 Sekunden ist.

13. Verfahren nach Anspruch 5 und nach einem der Ansprüche 6 bis 12, **dadurch gekennzeichnet, dass** das der Pegel der natürlichen Umgebungshelligkeit mit der niedrigen Schwelle S1 und mit einer hohen Schwelle S2 verglichen (Fig. 3) wird, um das Einschalten der Leuchten des Fahrzeugs auszulösen, wenn dieser Pegel kleiner als die oder gleich der Schwelle S 1 ist, und das Ausschalten der Leuchten des Fahrzeugs auszulösen, wenn der Pegel größer als die hohe oder gleich der hohen Schwelle S2 ist.

14. Verfahren nach den vorhergehenden Ansprüchen, **dadurch gekennzeichnet, dass** die beiden niedrigen Schwellen N2 und N3 gleich 450 Lux sind, T2 = 3 s, D1 = 60 m; die erste Geschwindigkeitsschwelle gleich 20 km/h ist, D2 = 5 m, T13 = 10 s, T12 = 30 s; T17 = 10 s, T4 = 3 s; die zweite Geschwindigkeitsschwelle gleich 20 km/h ist, T5 = 5 s, T6 = 10 s, T14 = 30 s, T15 = 10 s, S1 = 550 Lux, T11 = 45 s, S2 = 2700 Lux; und die dritte Geschwindigkeitsschwelle gleich 20 km/h ist.

15. Verfahren nach den vorhergehenden Ansprüchen, **dadurch gekennzeichnet, dass** die hohen Schwellen N 1 und N4 erweiterbar und festgelegt sind, ausgehend von den Werten der natürlichen Umgebungshelligkeit (NLA) durch Subtraktion eines vorher festgelegten Werts (Δ), mit einem maximalen Grenzwert (Nm) und einem minimalen Grenzwert (S1).

16. Verfahren nach Anspruch 15, **dadurch gekennzeichnet, dass** der vorher festgelegte Wert (Δ) gleich 50 Lux ist, der maximale Grenzwert (Nm) gleich 1700 Lux ist und der minimale Grenzwert (S1) gleich 550 Lux ist.

17. Automatische Steuervorrichtung von Leuchten eines Kraftfahrzeugs zur Durchrührung des Verfahrens der Ansprüche 1 bis 16, **dadurch gekennzeichnet, dass** sie eine Zentraleinheit zur Inforrnations- bzw. Datenverarbeitung (1) zur Steuerung der Funktion von Steuereinrichtungen (6) zur Einschaltung/Ausschaltung der Leuchten (7) des Fahrzeugs aufweist, welche am Eingang mit einem Helligkeitssensor (3) in der Umgebung des Fahrzeugs, einem Sensor (4) der Fahrzeuggeschwindigkeit und mit einem Zeitgeber (5) verbunden sind.

## Claims

1. Method of automatically controlling the lights of a motor vehicle on the basis of information about luminosity in the environment of the vehicle, its speed of travel and distance covered by it, **characterized in that**:
with a view to turning on the lights (Fig. 3, Fig. 4), the level of instantaneous luminosity (LIL) in the environment of the vehicle is compared with two thresholds high N1 and low N2 respectively, so as, if the level of instantaneous luminosity becomes and remains less than the low threshold N2, and
- if the crossing through the two thresholds, of the level of instantaneous luminosity, occurs in a time (TN1.2) less than or equal to T2, to immediately turn on the lights of the vehicle if the speed of the vehicle is zero, to turn on the lights of the vehicle after a distance covered D1 if the speed of the vehicle is greater than or equal to a first speed threshold, to turn on the lights of the vehicle after a distance covered D2 if the speed of the vehicle is less than the first speed threshold, following the crossing of the level of instantaneous luminosity through the low threshold N2,
- if the crossing through the two thresholds, of the level of instantaneous luminosity, occurs in a time lying between T2 and T12 , to turn on the lights of the vehicle after the period of time T13 following the crossing of the level of instantaneous luminosity through the low threshold N2, and
- if before the end of these time or distance counts, the level of instantaneous luminosity crosses back above and then below the low threshold N2, to turn on the lights of the vehicle after a period of time T17 following this new crossing of the level of instantaneous luminosity through the low threshold N2.

2. Method according to Claim 1, **characterized in that**:
with a view to turning off the lights (Fig. 3, Fig. 5), the level of instantaneous luminosity (LIL) in the environment of the vehicle is compared with low and high thresholds N3 and N4 respectively, so as, if the level of instantaneous luminosity becomes and remains greater than the high threshold N4, and
- if the crossing through the two thresholds, of the level of instantaneous luminosity, occurs in a time (TN3.4) less than or equal to T4 and if the speed of the vehicle is greater than or equal to a second speed threshold, to turn off the lights of the vehicle after a period of time equal to T5, and if the speed of the vehicle is less than the second speed threshold, to turn off the lights of the vehicle after a period of time T6, following the crossing of the level of instantaneous luminosity through the high threshold N4,
- if the crossing through the two thresholds, of the level of instantaneous luminosity, occurs in a time lying between T4 and T14, to turn off the lights of the vehicle after a period of time T15 following crossing of the level of instantaneous luminosity through the high threshold N4, and
- if before the end of these counts, the level of instantaneous luminosity crosses back below and then above the high threshold N4, to turn off the lights of the vehicle after a period of time corresponding to T5, T6 or T15, as defined previously following this new crossing of the level of instantaneous luminosity through the high threshold N4.

3. Device according to Claim 1 or 2, **characterized in that** in the case where the speed of the vehicle becomes zero and where the level of instantaneous luminosity is less than the low threshold N2 while the distance D1 or D2 has not yet been reached, the lights of the vehicle are turned on.

4. Method according to Claim 2, **characterized in that** on start-up, in the case where the level of instantaneous luminosity (LIL) is less than a low threshold S1 and oversteps the high threshold N4, without having overstepped the low threshold N3, the lights of the vehicle are turned off following a period of time T5 or T6 if the speed of the vehicle is greater than/equal to or respectively less than a third speed threshold.

5. Method according to any one of the preceding claims, **characterized in that** on cutting the vehicle's contact, if the level of instantaneous luminosity (LIL) is less than a low threshold S1, the lights of the vehicle are turned on for a period of time T11, following the cutting of the contact or following the closing of the driver's door of the vehicle, if said door has been opened before the end of this period of time T11.

6. Method according to any one of the preceding claims, **characterized in that**:
- a periodic acquisition of the instantaneous luminosity information (LIL) is carried out (at 10) at the output of a luminosity sensor associated with the vehicle,
- values of immediate luminosity are calculated (at 11) by calculating the average over a first period of time, of the instantaneous luminosity values lying in a first determined range of variation,
- values of immediate ambient luminosity are calculated (at 12) by calculating the average over a second period of time, of the immediate luminosity values lying in a second determined range of variation,
- values of natural ambient luminosity (LAL) are calculated (at 13) by calculating the average of n first values of immediate ambient luminosity, lying in a third determined range of variation, over a third maximum period of time, and
- the high thresholds N1 and N4 are determined on the basis of these values of natural ambient luminosity (LAL).

7. Method according to Claim 6, **characterized in that** the first, second and third determined ranges of variation are equal to 50 Lux.

8. Method according to Claim 6 or 7, **characterized in that** n is equal to 10.

9. Method according to any one of Claims 6, 7 or 8, **characterized in that** the instantaneous luminosity information is acquired every 200 ms approximately.

10. Method according to any one of Claims 6 to 9, **characterized in that** the first period of time is equal to 1 second approximately.

11. Method according to any one of Claims 6 to 10, **characterized in that** the second period of time is equal to 3 seconds approximately.

12. Method according to any one of Claims 6 to 11, **characterized in that** the third period of time is equal to 60 seconds approximately.

13. Method according to Claim 5 and any one of Claims 6 to 12, **characterized in that** the level of natural ambient luminosity (LAL) is compared (Fig. 3) with the low threshold S1 and with a high threshold S2 so as to trigger the turning on of the lights of the vehicle if this level is less than or equal to the threshold S1 and the turning off of the lights of the vehicle if the level is greater than or equal to the high threshold S2.

14. Method according to the preceding claims, **characterized in that** the two low thresholds N2 and N3 are equal to 450 Lux, T2 = 3 s, D1 = 60 m, the first speed threshold is equal to 20 km/h, D2 = 5 m, T13 = 10 s, T12 = 30 s, T17 = 10 s, T4 = 3 s, the second speed threshold is equal to 20 km/h, T5 = 5 s, T6 = 10 s, T14 = 30 s, T15 = 10 s, S1 = 550 Lux, T11 = 45 s, S2 = 2700 Lux and the third speed threshold is equal to 20 km/h.

15. Method according to the preceding claims, **characterized in that** the high thresholds N1 and N4 are changeable and determined on the basis of the values of natural ambient luminosity (LAL) by subtracting from the latter values a predetermined value (Δ), with a maximum limit, value (Nm) and a minimum limit value (S1).

16. Method according to Claim 15, **characterized in that** the predetermined value (Δ) is equal to 50 Lux, the maximum limit value is equal to 1700 Lux and the minimum limit value is equal to 550 Lux.

17. Device for automatically controlling the lights of a motor vehicle, for the implementation of the method of Claims 1 to 16, **characterized in that** it comprises a central information processing unit (1) for controlling the operation of the means of command (6) of the turning on/turning off of the lights (7) of the vehicle, which are linked at input to a sensor of luminosity in the environment of the vehicle (3), a sensor of speed (4) of the vehicle and a time base (5).
